# EUROPEAN PATENT APPLICATION

(11) **EP 4 258 647 A1**
(43) Date of publication of application: **11.10.2023**
(21) Application number: 21900906.5
(22) Date of filing: 24.11.2021
(51) Int. Cl.: H04N 5/232, H04N 5/225, H04N 5/14

(54) **METHOD AND ELECTRONIC DEVICE FOR CORRECTING CAMERA SHAKE**

(30) Priority: 04.12.2020 KR 20200168686
(71) Applicant: Samsung Electronics Co., Ltd., Suwon-si, Gyeonggi-do 16677 (KR)
(72) Inventor: KIM, Sungmin, Suwon-si Gyeonggi-do 16677 (KR); BYON, Kwangseok, Suwon-si Gyeonggi-do 16677 (KR); PARK, Dongyoul, Suwon-si Gyeonggi-do 16677 (KR); SHIN, Junseok, Suwon-si Gyeonggi-do 16677 (KR); LEE, Kihuk, Suwon-si Gyeonggi-do 16677 (KR)
(74) Representative: HGF
(86) International application number: PCT/KR2021/017326
(87) International publication number: WO 2022/119218

(57) **Abstract**

An electronic device can comprise: a camera module comprising a prism; at least one sensor; and at least one processor. The at least one processor can: obtain image data by driving the camera module; detect an object on the basis of the obtained image data; control the prism so as to track the object, on the basis of first data which controls the movement of the prism by a first unit angle in a first angle range; and control the prism so as to correct shake, on the basis of second data which controls the movement of the prism by a second unit angle smaller than the first unit angle in a second angle range smaller than the first angle range. Various other embodiments identified by the specification are possible.

## Description

### [Technical Field]

Embodiments disclosed herein relate to an electronic device and method for image stabilization at the time of camera shooting.

### [Background Art]

In terms of camera functions, an image stabilization function is an essential and important function to obtain a clear picture. In general, image stabilization methods include optical image stabilization (OIS) and digital IS (DIS). The optical image stabilization method reduces shake by moving the lens or sensor, and the digital image stabilization method is a method for reducing shake via digital processing in a manner borrowed from a portable terminal.

### [Disclosure of Invention]

### [Technical Problem]

Most electronic devices perform image stabilization (image stabilization function) and object tracking (object tracking function) via a single camera module. In order to apply the image stabilization function and the object tracking function, accurate position sensing is required, and a mechanical structure change is inevitable for this purpose. However, there is a limit in increasing the size of a portable terminal, and thus there is a restriction in changing the structure of the camera module for accurate position sensing. Therefore, a method for controlling image stabilization in a scan structure for object tracking is basically added.

If image stabilization is controlled using the scan structure as it is, the resolution of the angle and/or voltage of the position sensing IC (e.g., Hall sensor) is lowered, and thus image stabilization performance deteriorates. In order to improve this, an A/D converter (analog-to-digital converter) having high resolution may be used or a long-stroke response sensor may be applied, but a problem occurs in that the size of the electronic device increases or the cost of the controller increases.

Various embodiments of the disclosure may provide an electronic device which secures image stabilization performance and a method for controlling the electronic device, by securing and applying data for object tracking and data for image stabilization in separate storage spaces while utilizing the mechanical structure for object tracking.

### [Solution to Problem]

An electronic device according to an embodiment disclosed herein may include a camera module including a prism, at least one sensor, and at least one processor. The at least one processor may drive the camera module to obtain image data, detect an object based on the obtained image data, control the prism to track the object based on first data for controlling the movement of the prism by a first unit angle in a first angle range, and control the prism for image stabilization based on second data for controlling the movement of the prism by a second unit angle smaller than the first unit angle in a second angle range smaller than the first angle range.

In addition, an operation method of an electronic device according to an embodiment disclosed herein may include: driving a camera module to obtain image data; detecting an object based on the obtained image data; controlling the prism to track the object based on first data for controlling the movement of the prism by a first unit angle in a first angle range; and controlling the prism for image stabilization based on second data for controlling the movement of the prism by a second unit angle smaller than the first unit angle in a second angle range smaller than the first angle range.

In addition, an electronic device according to an embodiment disclosed herein may include a camera module including a prism and a lens assembly, at least one sensor, at least one processor operatively connected to the camera module and the at least one sensor, and a memory operatively connected to the at least one processor. The memory may store instructions which, when executed, allow the at least one processor to: drive the camera module to obtain image data; in case that a control event for the prism occurs, in response to the event, determine at least one mode among a first mode for tracking an object and a second mode for image stabilization; in case that the first mode is determined, control the prism based on first data for controlling the movement of the prism by a first unit angle in a first angle range; and, in case that the second mode is determined, control the prism based on second data for controlling the movement of the prism by a second unit angle smaller than the first unit angle in a second angle range smaller than the first angle range.

### [Advantageous Effects of Invention]

According to various embodiments disclosed herein, image stabilization may be performed precisely without structural change of a camera module.

In addition, according to various embodiments, by separately storing data applied to object tracking and image stabilization (e.g., OIS), object tracking is possible and image stabilization may be performed at a level similar to that of an existing OIS system.

In addition, according to various embodiments, a preview image which does not shake may be provided to a user.

In addition to this, various effects identified directly or indirectly via the disclosure may be provided.

### [Brief Description of Drawings]

FIG. 1 shows a structure of an electronic device and a camera module according to an embodiment;
FIG. 2 shows a camera module according to an embodiment;
FIG. 3 shows an exploded perspective view of a camera module according to an embodiment;
FIG. 4 is a view showing voltage production according to relative positions of a coil and a magnetic body according to an embodiment;
FIG. 5 shows hardware and software modules in an electronic device according to an embodiment;
FIG. 6 is a flowchart showing a process of performing object tracking and image stabilization by controlling a prism in an electronic device according to an embodiment;
FIG. 7 is a flowchart showing a process of controlling a prism in response to a movement of an object in an electronic device according to an embodiment;
FIG. 8 shows a prism control angle for object tracking in an electronic device according to an embodiment;
FIG. 9 is a flowchart showing a process of controlling a prism in response to image stabilization in an electronic device according to an embodiment;
FIG. 10 shows a prism control angle for image stabilization in an electronic device according to an embodiment;
FIG. 11 is a flowchart showing a process of configuring a prism control angle in an electronic device according to an embodiment;
FIG. 12 is a block diagram of an electronic device in a network environment according to various embodiments; and
FIG. 13 is a block diagram illustrating a camera module according to various embodiments.

### [Mode for Carrying out the Invention]

Hereinafter, various embodiments of the disclosure are described with reference to the accompanying drawings. However, it should be understood that the disclosure is not intended to limit the specific embodiments, and includes various modifications, equivalents, and/or alternatives of the embodiments of the disclosure.

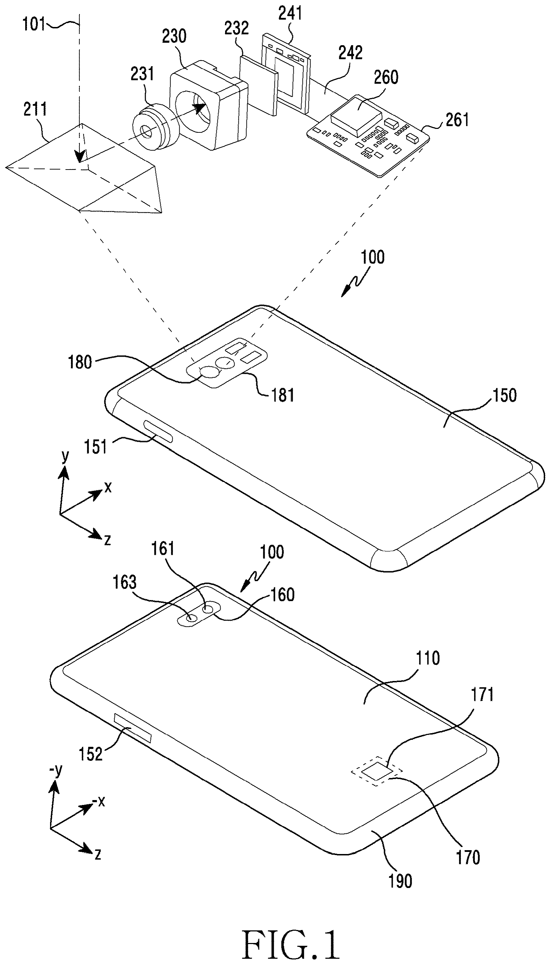

FIG. 1 shows a structure of an electronic device 100 and a camera module 180 according to an embodiment.

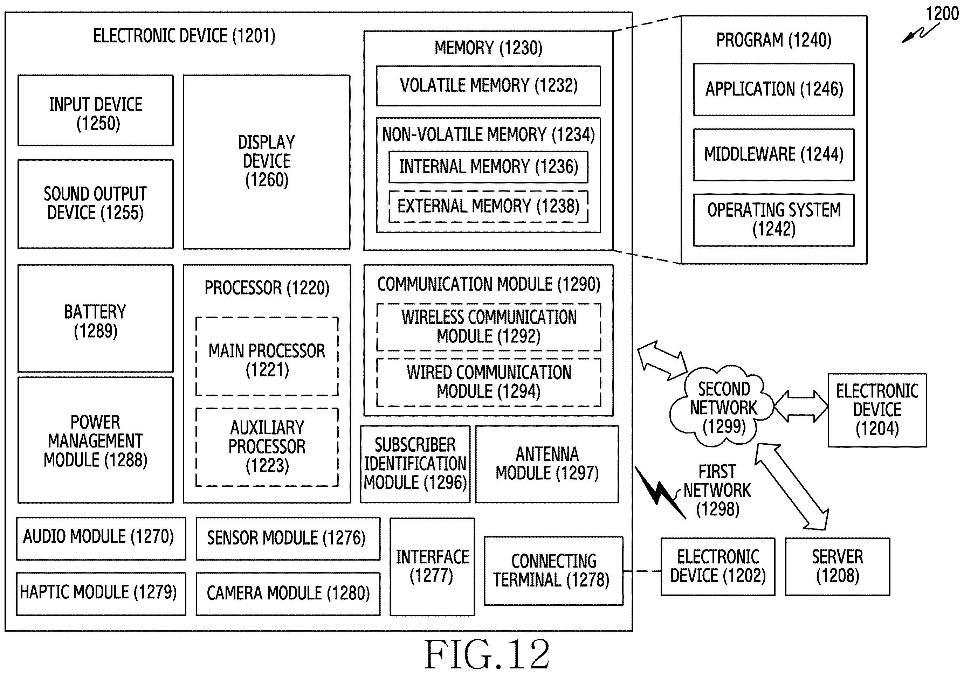

FIG. 1 is a view schematically showing the appearance of an electronic device 100 (e.g., an electronic device 1200 of FIG. 12) to which a camera module 180 (e.g., a camera module 1280 of FIG. 12) is mounted and the camera module 180 according to an embodiment. The embodiment of FIG. 1 has been illustrated and described on the premise of a mobile device, in particular, a smart phone, but it will be clearly understood to those skilled in the art that the embodiment may be applied to an electronic device having a camera mounted thereto among various electronic devices or mobile devices.

Referring to FIG. 1, a display 110 (e.g., a display module 1260 in FIG. 12) may be disposed on a front surface of the electronic device 100 according to an embodiment. In an embodiment, the display 110 may occupy most of the front surface of the electronic device 100. The display 110 and a bezel 190 area surrounding at least a part of an edge of the display 110 may be arranged on the front surface of the electronic device 100. The display 110 may include a flat area and a curved area extending from the flat area toward a lateral surface of the electronic device 100. The electronic device 100 shown in FIG. 1 is an example, and various embodiments are possible. For example, the display 110 of the electronic device 100 may include a flat area without a curved area, or include a curved area on only one edge not on both sides. In addition, in an embodiment, a curved area may extend to a rear surface of an electronic device, and thus the electronic device 100 may include an additional flat area.

In an embodiment, the electronic device 100 may additionally include a speaker, a receiver, a front camera, a proximity sensor, a home key, or the like. In the electronic device 100 according to an embodiment, a rear cover 150 may be integrally provided with a main body of the electronic device. In another embodiment, the rear cover 150 may be separated from the main body of the electronic device 100 to have a shape in which a battery may be replaced. The rear cover 150 may also be referred to as a battery cover or a rear cover.

In an embodiment, a fingerprint sensor 171 for recognizing a user's fingerprint may be included in a first area 170 of the display 110. The fingerprint sensor 171 may be disposed on a lower layer of the display 110, and thus may not be viewed by a user or may be difficult to be viewed. In addition, besides the fingerprint sensor 171, a sensor for additional user/biometric authentication may be disposed in a partial area of the display 110. In another embodiment, the sensor for user/biometric authentication may be disposed in one area of the bezel 190. For example, an IR sensor for iris authentication may be exposed through one area of the display 110 or through one area of the bezel 190.

In an embodiment, a front camera 161 may be disposed in a second camera area 160 of the front surface of the electronic device 100. In the embodiment of FIG. 1, the front camera 161 is illustrated as being exposed through one area of the display 110, but in another embodiment, the front camera 161 may be exposed through the bezel 190. The electronic device 100 may include at least one front camera 161. For example, the electronic device 100 may include two front cameras such as a first front camera and a second front camera. In an embodiment, the first front camera and the second front camera may be cameras of the same type having the same specifications (e.g., pixels), but the first front camera and the second front camera may be implemented as cameras having different specifications. The electronic device 100 may support functions related to a dual camera (e.g., 3D shooting, auto focus, etc.) via the two front cameras. The above-mentioned description of the front camera may be equally or similarly applied to a rear camera of the electronic device 100.

In another embodiment (not shown), the front camera 161 may be disposed to face the second camera area 160 on the rear surface (e.g., the surface facing the -y direction) of the second camera area 160 of the display 110. For example, the front camera 161 may not be visually exposed through the second camera area 160, and may include a hidden under display camera (UDC).

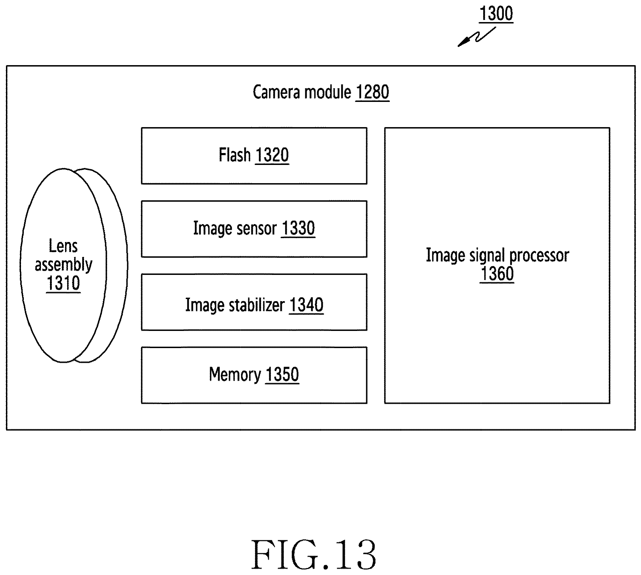

According to an embodiment, the second camera area 160 of the display 110 at least partially facing the front camera 161 may be a part of an area for displaying content and may be formed as a transmitting area having a designated transmittance. According to an embodiment, the transmitting area may be formed to have a transmittance ranging from about 5% to about 20%. For example, the transmission area may include an area overlapping an effective area (e.g., the field of view area (FOV, field of view)) of the front camera 161, through which light to form an image formed by an image sensor (e.g., an image sensor 1330 in FIG. 13) passes. For example, the transmitting area of the display 110 may include an area having a lower pixel density and/or wiring density than the periphery.

In an embodiment, in the electronic device 100, a sensor 163 or various types of hardware for assisting shooting, such as a flash may be additionally disposed. For example, a distance sensor (e.g., a TOF sensor) for detecting a distance between a subject and the electronic device 100 may be further included. The distance sensor may be applied to both the front camera and/or the rear camera. The distance sensor may be separately disposed or may be included in the front camera and/or rear camera.

In an embodiment, at least one physical key may be disposed on a lateral surface portion of the electronic device 100. For example, a first function key 151 for turning ON/OFF the display 110 or turning ON/OFF the power of the electronic device 100 may be disposed on the right edge based on the front surface of the electronic device 100. In an embodiment, a second function key 152 for controlling the volume of the electronic device 100 or the brightness of a screen may be disposed on the left edge of the front surface of the electronic device 100. In addition to this, an additional button or key may be placed on the front surface or rear surface of the electronic device 100. For example, a physical button or touch button mapped to a specific function may be disposed in a lower end area of the bezel 190 of the front surface.

Referring to FIG. 1, the electronic device 100 according to an embodiment may include at least one camera module, a flash, or sensors such as a distance sensor in a first camera area 181. The camera module 180 may include a lens assembly 231 (e.g., a lens assembly 1310 in FIG. 13), an AF carrier assembly 230, an infrared cut filter 232, an image sensor 241 (e.g., an image sensor 1330 in FIG. 13), and an image signal processor 260 (e.g., an image signal processor 1360 of FIG. 13).

In an embodiment, the lens assembly 231, the AF carrier assembly 230, and the image sensor 241 may not be arranged to be parallel to the direction of light incident on the electronic device 100, but may be arranged to be substantially perpendicular to the direction of light incident on the electronic device 100. For example, the thickness of the electronic device 100 may be reduced by arranging the lens assembly, the AF carrier assembly, and the image sensor to be substantially perpendicular to the direction 101 (e.g., the -y direction) of light incident on the electronic device 100. A prism 211 included in the camera module 180 may serve as a reflector, and may change the direction 101 of incident light so that the light passes through the lens assembly 231, the AF carrier assembly 230, and the image sensor 241. For example, the prism 211 may change the direction of light to +x direction by reflecting light incident in the -y direction. Due to this structural characteristic, the electronic device 100 may perform image stabilization by controlling the movement of the prism 211.

In an embodiment, the lens assembly 231 may differ in the number, arrangement, and/or type of lenses according to the front camera and rear camera. The front camera and the rear camera may have different characteristics (e.g., focal length, maximum magnification, etc.) according to the type of a lens assembly. The lens may be moved forward and backward along the optical axis, and the focal length may be changed so that a target object which is a subject may be clearly photographed.

In an embodiment, the camera module 180 may include the lens assembly 231 on which at least one lens aligned on the optical axis is mounted and the AF carrier assembly 230 on which at least one coil is mounted, the AF carrier assembly at least partially surrounding the circumference of the lens assembly 231 around the optical axis.

In an embodiment, the infrared cut filter 232 may be disposed on an upper surface (e.g., the -x direction) of the image sensor 241. An image of the subject passing through the lens may be partially filtered by the infrared cut filter 232, and then detected by the image sensor 241.

In an embodiment, the image sensor 241 may be a complementary metal oxide semiconductor (CMOS) sensor or a charged coupled device (CCD) sensor. A plurality of individual pixels may be integrated in the image sensor 241, and each individual pixel may include a micro lens, a color filter, and a photodiode. Each individual pixel may convert input light into an electrical signal as a kind of photodetector. A photodetector generally may not detect the wavelength of the captured light by itself and may not determine color information. The photodetector may include a photodiode.

In an embodiment, the image sensor 241 may be electrically connected to the image signal processor 260 connected to a printed circuit board 261 by a connector 242. A flexible printed circuit board (FPCB), a cable, or the like may be used as the connector 242. Optical information of a subject incident through the lens assembly 231 may be converted into an electrical signal by the image sensor 241 to be input to the image signal processor 260.

In an embodiment, the camera module 180 may be disposed not only on the rear surface but also on the front surface of the electronic device 100. In addition, the electronic device 100 may include not only one camera module 180 but also multiple camera modules 180 to improve the performance of the camera. For example, the electronic device 100 may further include the front camera 161 for video call or self-camera shooting. The front camera 161 may support a relatively low number of pixels compared to a rear camera module. The front camera may be relatively smaller than the rear camera module.

The electronic device 100 illustrated in FIG. 1 corresponds to one example, and does not limit the shape of the device to which the technical idea disclosed herein is applied. The technical idea disclosed herein is applicable to various user devices having a first camera module facing a first direction and a second camera module facing a direction different from the first direction. For example, the technical idea disclosed herein may be applied even to a foldable electronic device, a table, or a laptop which may be folded horizontally or vertically by adopting a flexible display and hinge structure. In addition, even when it is possible for the first camera module and the second camera module facing the same direction to be arranged to face different directions via rotation, folding, deformation, etc. of a device, the technical idea disclosed herein may also be applied. For example, although the electronic device 100 of the illustrated example shows a bar-type or plate-type appearance, various embodiments of the present document are not limited thereto. For example, the illustrated electronic device may be a part of a rollable electronic device. A rollable electronic device may indicate an electronic device capable of bending and transforming the display 110 so that at least a portion of the display 110 may be wound or rolled or stored inside the electronic device 100. The rollable electronic device may use an expanded display area by unfolding the display 110 or by exposing a larger area of the display 110 to the outside, depending on a user's needs. The display 110 may be referred to as a slide-out display or an expandable display.

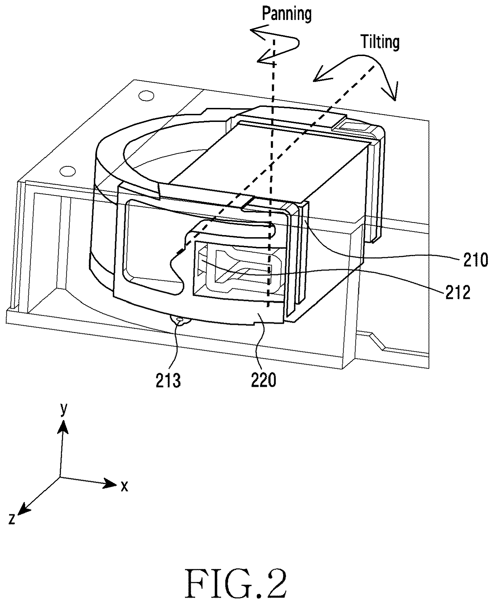

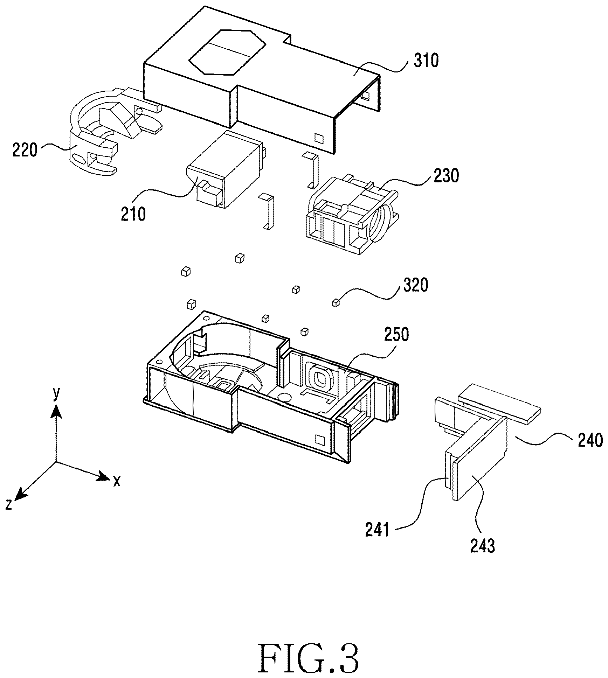

FIG. 2 shows a camera module 180 according to an embodiment. FIG. 3 shows an exploded perspective view of a camera module 180 according to an embodiment.

Referring to FIG.2 and FIG. 3, the camera module 180 may include a prism holder 210, a panning ball guide 212, a tilting ball guide 213, and a mid-guide 220. The prism holder 210 may include the prism 211. The prism 211 may rotate on the panning axis (e.g., y-axis) and tilting axis (e.g., z-axis). For example, the prism 211 may rotate in the panning axis based on the panning ball guide 212 and may rotate in the tilting axis based on the tilting ball guide 213.

In an embodiment, the prism 211 included in the prism holder 210 may be disposed at the front side (e.g., the -x-axis direction) of the lens assembly 231, and the prism 211 may reflect light incident in one axis (e.g., the -y direction) toward the lens assembly 231. For example, the prism 211 may convert the light entering the rear surface (e.g., in the -y direction) of the electronic device 100 by about 90° and direct the light toward the lens assembly 231. The camera module 180 may include the prism 211 and the mid-guide 220 surrounding the prism holder 210.

In an embodiment, the camera module 180 may include the prism 211 and/or at least two magnetic members fixed to the lens assembly 231. The camera module 180 may include at least two driving coils interacting with the at least two magnetic members. The at least two magnetic members may move integrally with the prism 211 and/or the lens assembly 231 and may transmit electromagnetic force produced by a driving coil to the prism 211 and/or the lens assembly 231.

In an embodiment, the camera module 180 may include a housing assembly 250 to which the mid-guide 220, the prism holder 210, and the AF carrier assembly 230 may be mounted. The housing assembly 250 may be covered by a cover 310. The camera module 180 may include a plurality of bearings 320, and the plurality of bearings 320 may support rotation and/or linear motion of the prism holder 210 and the AF carrier assembly 230.

In an embodiment, an image sensor assembly 240 may include a printed circuit board 243 (e.g., a printed circuit board (PCB), a printed board assembly (PBA), a flexible PCB (FPCB), or a rigid-flexible PCB (RFPCB)), and an image sensor 241 disposed to be connected to the printed circuit board 243. The image sensor assembly 240 may be disposed in the rear side (e.g., the +x direction) of the AF carrier assembly 230, and may collect, via the image sensor 241, light which has passed through the lens assembly 231.

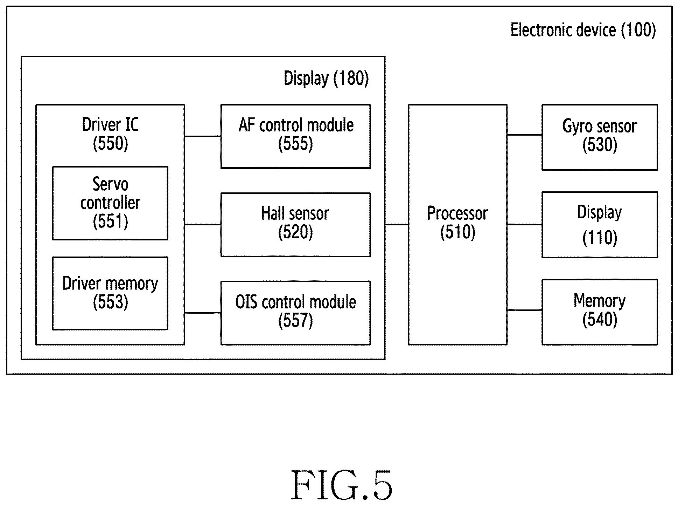

In an embodiment, the printed circuit board 243 may be electrically connected to an auto focus (AF) driving unit (e.g., an AF control module 555 of FIG. 5) and an optical image stabilization (OIS) driving unit (e.g., an OIS control module 557 of FIG. 5). When the electronic device 100 shakes, at least one processor (e.g., a processor 510 in FIG. 5) included in the electronic device 100 may produce an OIS control value to compensate for the shake of the electronic device 100, and the electronic device 100 may transmit an electrical signal corresponding to an OIS control value to at least one coil of the OIS driving unit (e.g., the OIS control module 557 in FIG. 5), thereby performing image stabilization. When shooting with a camera, at least one processor included in the electronic device 100 (e.g., the processor 510 in FIG. 5) may generate an AF control value to adjust the focal distance between the subject and the camera, the electronic device 100 may implement AF by transmitting an electrical signal corresponding to an AF control value to at least one coil of the AF driving unit (e.g., the AF control module 555 of FIG. 5).

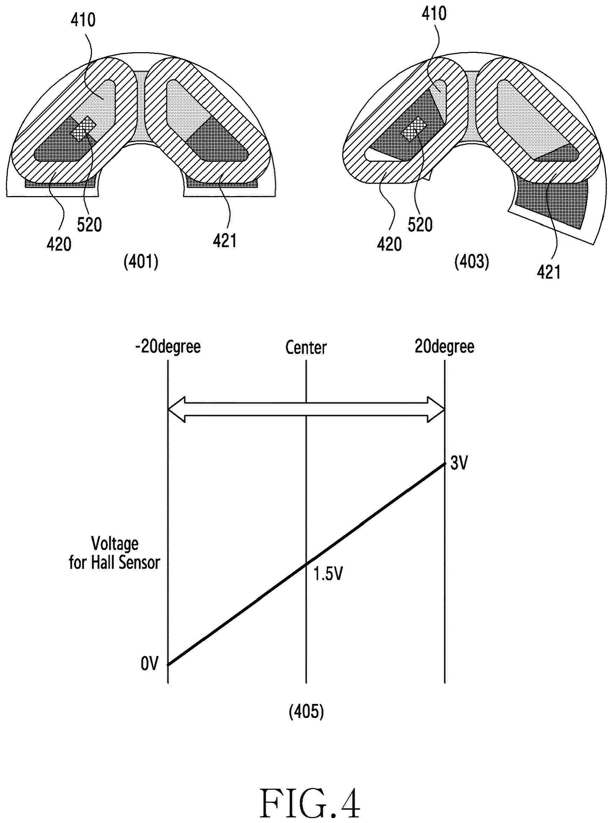

FIG. 4 is a view showing voltage production according to relative positions of a coil and a magnetic body according to an embodiment. State 401 is a state (e.g., center in a graph 405) where the camera module 180 neither moves nor rotates in any direction. State 403 is a state rotated by +20 degrees based on state 401 (e.g., 20 degrees in graph 405). A voltage value for a hall sensor 520 may change according to the relative positions of a coil 420 and a magnetic member (e.g., magnet) 410. A graph 405 is a graph showing a change in voltage for the hall sensor 520 when the magnetic member 410 moves (e.g., rotates). The voltage for the hall sensor 520 may be referred to as a hall voltage.

Referring to FIG. 4, at least one hall sensor 520 configured to detect a position of a magnetic member may be disposed at the center of at least one driving coil (e.g., a first coil 420 or a second coil 421). The hall sensor 520 may measure the position of the magnetic member 410 with respect to the hall sensor 520 via interaction with the magnetic member 410 facing thereto. In other words, the hall sensor 520 may be disposed at the center of at least one driving coil (e.g., the first coil 420), and may thus measure positions in the x-axis, y-axis, and z-axis directions with respect to the at least one hall sensor (e.g., the hall sensor 520) of at least one magnetic member (e.g., the magnetic member 410). For example, the hall sensor 520 may include a transmission unit for producing a magnetic field of a specific frequency and a reception unit for receiving the magnetic field produced by the transmission unit, and may obtain information on the movement of the magnetic member 410.

Referring to FIG. 4, the hall voltage may change gradually according to a rotation angle of a magnetic member. For example, when the magnetic member 410 is rotated -20 degrees based on state 401, the hall voltage may be 0 V. When the magnetic member 410 is in state 401, the hall voltage may be +1.5 V. When the magnetic member 410 is rotated +20 degrees based on state 401 (e.g., state 403), the hall voltage may be +3 V. The camera module 180 may measure the positions of the prism 211 and/or the lens assembly 231 based on the hall voltage detected by the hall sensor 520.

According to an embodiment, the camera module 180 may include another sensor for identifying the movement (rotation) (e.g., positions in the x-axis, y-axis, and z-axis directions) of at least one magnetic member (e.g., the magnetic member 410). For example, the camera module 180 may include a tunnel magneto-resistance (TMR) sensor, and may identify the movement (rotation) of the magnetic member 410 using a resistance value that changes based on the relative angles of the plurality of magnetic members of the TMR sensor. In addition, according to another embodiment, the camera module 180 may identify the movement (rotation) of the magnetic member 410 using an anisotropic magneto-resistance (AMR) sensor or a giant magneto-resistance (GMR) sensor.

FIG. 5 shows hardware and software modules in an electronic device according to an embodiment.

Referring to FIG. 5, an electronic device 100 may include a camera module (e.g., the camera module 1280 of FIG. 12) 180, a processor (e.g., the processor 1220 of FIG. 12) 510, a hall sensor 520, a gyro sensor 530, a display (e.g., the display module 1260 of FIG. 12) 110, and a memory (e.g., the memory 1230 of FIG. 12) 540. The processor 510 may be electrically or operatively connected to the camera module 180, the hall sensor 520, the gyro sensor 530, the display 110, and the memory 540.

In an embodiment, the camera module 180 may include a driver IC 550, and auto focus (AF) control module 555, an OIS control module 557, and a hall sensor 520. The auto focus (AF) control module 555, the OIS control module 557, and the hall sensor 520 may be electrically connected to each other. In an example, in the drawing, the auto focus (AF) control module 555, the OIS control module 557, and the hall sensor 520 are shown to be disposed independently, but the auto focus (AF) control module 555 and the OIS control module 557 may conceptually include a hall sensor 520. The driver IC 550 may include a servo controller 551 and a driver memory 553. In an embodiment, the servo controller 551 may control an operation related to a focus adjustment function (e.g., a manual focus adjustment function) by using a servo motor or an ultrasonic motor included in the camera module 180. For example, the camera module 180 may support a manual focus adjustment function for a subject (or object) by moving a lens assembly (e.g., the lens assembly 231 of FIG. 1) based on the control of the servo controller 551.

In an embodiment, the AF control module 555 may perform a focus control function for a detected object in image data acquired via the camera module 180. The AF control module 555 may control the lens assembly 231 and/or the prism 211 to move in the optical axis direction, and may thus perform a focus adjustment function.

In an embodiment, the OIS control module 557 may control the lens and/or the prism 211 in response to the movement of the electronic device 100, and may thus operate to output a shake-free preview image via the display 110. The OIS control module 557 may control the prism 211 to move in the direction of the panning axis and tilting axis of FIG. 2, and may thus perform image stabilization.

In an embodiment, the hall sensor 520 may calculate the position of the lens assembly 231 and/or the prism 211 according to the attached position. The hall sensor 520 may calculate the position of the lens assembly 231 and/or the prism 211 via an electrical signal produced based on relative positions of the hall sensor 520 and a magnetic member (e.g., the magnetic member 410 of FIG. 4) attached to the lens assembly 231 and/or the prism 211. For example, the hall sensor 520 may output a hall voltage to be proportional to the magnetic field of the magnetic member 410 by using the hall effect, and may thus detect the movement of the magnetic member 410, the prism 211, and a movable frame (e.g., the prism holder 210) in which the magnetic member 410 and the prism 211 are arranged.

In an embodiment, the gyro sensor 530 may detect the movement of the electronic device 100. The gyro sensor 530 may determine the angular velocity of the electronic device 100 to detect the movement of the electronic device 100 in a first direction (e.g., yaw) and a second direction (e.g., pitch). The gyro sensor 530 may transfer the detected movement of the electronic device 100 to the processor 510.

In an embodiment, the memory 540 and/or the driver memory 553 may store calibration data for position sensing. The plurality of calibration data of the memory 540 and/or the driver memory 553 may be stored in different areas of the memory 540 and/or the driver memory 553.

In an embodiment, the processor 510 may control the camera module 180 to scan for object tracking or perform image stabilization. The processor 510 and/or the driver IC 550 may determine calibration data to be applied to the camera module 180, based on object tracking and/or image stabilization.

In an embodiment, the display 110 may output a preview image in real time, based on image data acquired via the camera module 180.

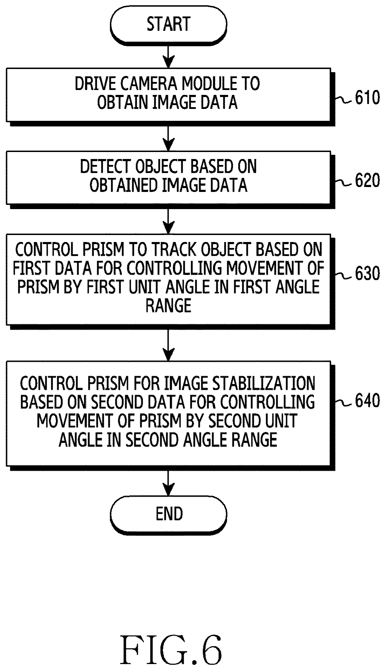

FIG. 6 is a flowchart showing a process of performing object tracking and image stabilization by controlling a prism 211 in an electronic device 100 according to an embodiment. In the following embodiments, each operation may be performed sequentially, but is not necessarily performed sequentially. For example, the order of operation 630 and operation 640 may be changed, and operation 630 and operation 640 may be performed in parallel. In other words, an operation of controlling the prism 211 for object tracking and an operation of controlling the prism 211 for image stabilization may be simultaneously performed. An operating subject of the flowchart shown in FIG. 6 may be understood as a processor (e.g., the processor 510 of FIG. 5) or an image signal processor (e.g., the image signal processor 260 of FIG. 1).

In operation 610 according to an embodiment, the processor 510 may drive the camera module 180 to acquire image data. The processor 510 may obtain a user's input for executing the camera application to drive the camera module 180. The user's input may include at least one among pressing a function key, touching a camera icon displayed on the display 110, or voice input. The processor 510 may obtain image data including various color values via the image sensor 241. The various color values may be determined based on a color filter array. For example, the color filter array may be a color filter array of a red, green, blue, emerald (RGBE) pattern, cyan, yellow, magenta (CYYM) pattern, cyan, yellow, green, magenta (CYGM) pattern, or red, green, blue, white (RGBW) pattern. The processor 510 may output a preview image via the display 110 based on the acquired image data.

In operation 620 according to an embodiment, the processor 510 may detect an object based on the obtained image data. The processor 510 may detect an object by analyzing the obtained image data. The object detection may include detecting at least one object via various detection methods. For example, an object may be detected by using artificial intelligence (AI) such as machine learning.

In operation 630 according to an embodiment, the processor 510 may control the prism 211 to track an object based on first data for controlling the movement of the prism 211 by a first unit angle in a first angle range. The first data may be data applied to a scan function for object detection. For example, based on the first data, the processor 510 may control the movement of the prism 211 in units of 0.01 ° within a range of about -20° to about +20°.

In operation 640 according to an embodiment, the processor 510 may control the prism 211 for image stabilization based on second data for controlling the movement of the prism 211 by a second unit angle in a second angle range. The second data may be data applied for image stabilization. For example, the processor 510 may control the movement of the prism 211 in units of 0.001 ° within about -2° to about +2° based on the second data.

In an embodiment, the processor 510 may detect the movement of the electronic device 100 in a first direction (e.g., yaw) and a second direction (e.g., pitch) via at least one motion sensor (e.g., the gyro sensor 530). The processor 510 may obtain the position and/or direction of the prism 211 via the hall sensor 520. The processor 510 may apply current to a driving coil (e.g., the first coil 420 and/or the second coil 421 of FIG. 4) included in the camera module 180 based on the obtained position and/or direction of the prism 211, and may thus control the prism 211 in a reverse direction to the shaking of the electronic device 100 in an electromagnetic induction method. The processor 510 may control the prism 211 in the opposite direction to the shaking of the electronic device 100 to perform image stabilization and maintain focus.

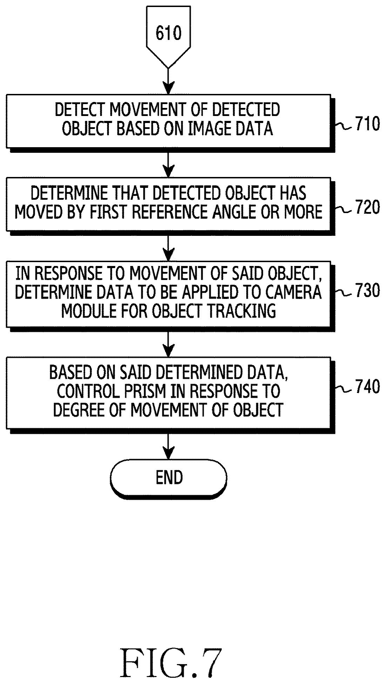

FIG. 7 is a flowchart showing a process of controlling a prism in response to a movement of an object in an electronic device according to an embodiment. FIG. 7 is a flowchart showing operations after operation 610 of FIG. 6. An operating subject of the flowchart shown in FIG. 7 may be understood as a processor (e.g., the processor 510 of FIG. 5) or an image signal processor (e.g., the image signal processor 260 of FIG. 1).

In operation 710 according to an embodiment, the processor 510 may detect the movement of the detected object based on the image data obtained via the camera module 180. The processor 510 may detect whether the relative position of the detected object with respect to the position of the background image within the acquired image data changes.

In operation 720 according to an embodiment, the processor 510 may detect that the detected object has moved more than a first reference angle. When the detected object moves more than the first reference angle based on the center of the camera, the processor 510 may perform the control of the prism 211 for object tracking. For example, the processor 510 may perform the control of the prism 211 to track the object when the processor 510 detects that the object to be photographed has moved about 0.5 degrees or more around the lens.

In an embodiment, the processor 510 may analyze the image data obtained via the camera module 180 to determine whether the detected object has moved. For example, the processor 510 may analyze the image data obtained via the camera module 180, and when the amount of change in the surrounding scenery of an object to be photographed is less than or equal to a first amount of change and the movement of the object to be photographed exceeds the first amount of change, the processor 510 may determine whether the detected object has moved to start object tracking.

In operation 730 according to an embodiment, the processor 510 may determine data to be applied to the camera module 180 for object tracking in response to the motion of the object. The processor 510 may select data related to image stabilization from among a plurality of data stored in the memory 540 and/or the driver memory 553. The memory 540 and/or the driver memory 553 may store a plurality of data to be applied to control the prism 211. For example, the driver memory 553 may store first data configured to control the prism 211 in a first angle range (e.g., about 40 degrees) for object tracking in a first area of the driver memory 553, and may store second data configured to control the prism 211 in a second angle range (e.g., about 4 degrees) to perform image stabilization in a second area of the driver memory 553. The processor 510 may determine the first data to be applied to the camera module 180 in response to the shaking of the electronic device 100.

In operation 740 according to an embodiment, the processor 510 may control the prism in response to the degree to which an object moves, based on the determined data. For example, when the object moves by a first angle based on the center of the camera, the object may be tracked by controlling the prism 211 by the first angle. As another example, when the object moves by the first change amount, the object may be tracked by controlling the prism 211 by an angle corresponding to the first change amount.

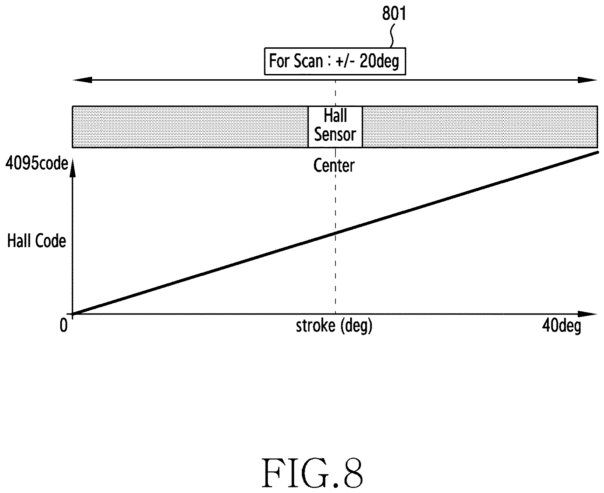

FIG. 8 shows a control angle with respect to the prism 211 for object tracking in an electronic device according to an embodiment. A first control angle with respect to the prism 211 for object tracking may be included within a first angle range. For example, the control angle for the prism 211 for object tracking may be included within a range of -20° to +20° of 40 degrees based on a reference angle (e.g., 0°).

Referring to FIG. 8, a scannable range 801 for object tracking is shown. The scannable range 801 may be -20° to +20° based on the hall sensor 520. The range of a hall code may be 0 to 4095 codes based on 12 bits. In other words, the processor 510 may control the prism 211 in units of about 0.01 deg/code (≒ 40 deg/4096 code).

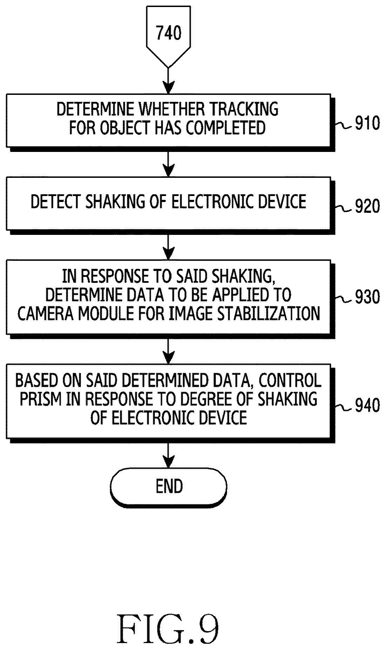

FIG. 9 is a flowchart showing a process of controlling a prism in response to image stabilization in an electronic device according to an embodiment. An operating subject of the flowchart shown in FIG. 9 may be understood as a processor (e.g., the processor 510 of FIG. 5) or an image signal processor (e.g., the image signal processor 260 of FIG. 1).

In an embodiment, operations of FIG. 9 may be performed after operation 740 of FIG. 7. For example, the operations of FIG. 9 may be operations after controlling the prism in response to the degree to which an object moves for object tracking in operation 740 of FIG. 7. In other words, when the operation for object tracking is completed, an operation for image stabilization of the electronic device may be performed. The order of the above operations may not be fixed, and an operation for tracking an object and an operation for image stabilization may be simultaneously performed.

In operation 910 according to an embodiment, the processor 510 may determine whether tracking of the object is completed.

In an embodiment, when the movement of the object detected based on the image data is stabilized, the processor 510 may determine that tracking of the object is completed. For example, the processor 510 may determine that tracking of the object is completed when the movement of the object to be tracked is equal to or less than a first value (e.g., a first change amount).

In operation 920 according to an embodiment, the processor 510 may detect the shaking of the electronic device 100. The processor 510 may complete the tracking of the object in the operation 910, and may detect the shaking of the electronic device 100.

In an embodiment, the processor 510 may detect the shaking of the electronic device 100 via at least one motion sensor (e.g., the gyro sensor 530 of FIG. 5). The at least one motion sensor may detect the shaking of the electronic device 100 while image data is acquired via the camera module 180. For example, the at least one motion sensor may be activated when the camera module 180 operates. The processor 510 may obtain how much shaking of the electronic device 100 is detected via at least one motion sensor included in the electronic device 100. The motion sensor may include at least one of an acceleration sensor, a gyro sensor (e.g., the gyro sensor 530 of FIG. 5) (or a gyroscope), a magnetic sensor, or a hall sensor (e.g., the hall sensor 520 of FIG. 5). For example, the processor 510 may measure the azimuth, pitch, roll, and yaw values of the electronic device 100 via the motion data obtained from the motion sensors, and may thus determine the movement of the electronic device 100. The motion data may include 3-axis motion data obtained from an acceleration sensor or 9-axis motion data obtained using a gyro sensor and a magnetic sensor. This is only exemplary, and the disclosure is not limited thereto. The motion sensor may further include at least another type of sensor.

In an embodiment, the processor 510 may obtain a time point and/or location at which the shaking of the electronic device 100 is detected in order to fix a field of view (FOV) at a time point at which the shaking of the electronic device 100 occurs. The processor 510 may store the obtained time point and/or location in the memory 540.

In operation 930 according to an embodiment, in response to the shake, the processor 510 may determine data to be applied to the camera module 180 for image stabilization. The processor 510 may select data related to image stabilization from among a plurality of data stored in the memory 540 and/or the driver memory 553. The memory 540 and/or the driver memory 553 may store a plurality of data to be applied to control the prism 211. For example, the driver memory 553 may store first data configured to control the prism 211 in a first angle range (e.g., a range of about 40 degrees) for object tracking in a first area of the driver memory 553, and may store second data configured to control the prism 211 in a second angle range (e.g., a range of about 4 degrees) to perform image stabilization in a second area of the driver memory 553.

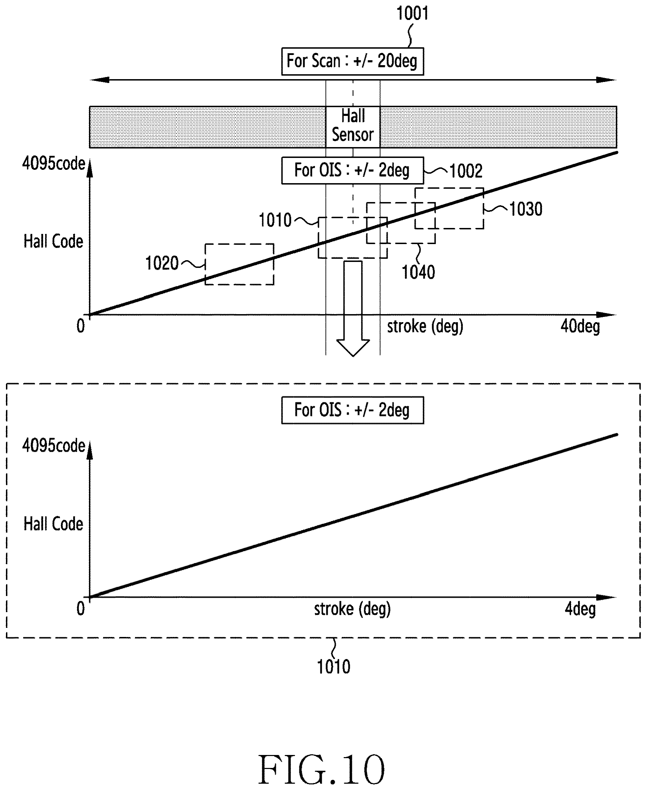

In an embodiment, the memory 540 and/or the driver memory 553 may store a plurality of data to be applied to image stabilization. The plurality of data to be applied to the image stabilization may be data applied to different angular sections, respectively. Additional content about this may be described via FIG. 10.

In operation 940 according to an embodiment, the processor 510 may control the prism 211 in response to the degree of the shaking of the electronic device 100, based on the determined data. The processor 510 may apply the data to be applied to image stabilization to the camera module 180, and may thus control the movement of the prism 211.

In an embodiment, the processor 510 may apply current to a driving coil (e.g., the first coil 420 and/or the second coil 421 of FIG. 4) included in the camera module 180 to control the movement of the prism 211. The processor 510 may obtain an electrical signal (e.g., a hall voltage) via the hall sensor 520 based on the movement of the electronic device 100 and the movement of the prism 211. The processor 510 may receive feedback of the position of the prism 211 based on the electrical signal (e.g., a hall voltage). The processor 510 may control the prism 211 by a second unit angle in a second angle range based on the received feedback of the position of the prism 211 and the movement of the electronic device 100.

In an embodiment, the processor 510 may control the prism 211 by a second unit angle in a second angle range in response to the shaking of the electronic device 100 within the second angle range. For example, the processor 510 may control the prism 211 by a unit angle of about 0.001° within a range of about 4°. When the processor 510 detects that the electronic device 100 moves by about ±1° within the second angle range in the yaw direction or the pitch direction, the processor may control the prism 211 by a unit angle of about 0.001 ° within a range of ±1° to correct the shaking.

FIG. 10 shows a prism control angle for image stabilization in an electronic device according to an embodiment. A second control angle of a prism for image stabilization may be smaller than a first control angle of the prism for object tracking. A second control angle for the prism 211 for image stabilization may be included in the second angle range. For example, the control angle of the prism 211 for object tracking may be included within a range of about 4° from about -2° to about +2° based on a reference angle (e.g., 0°). The correction angle for image stabilization may be data for hall calibration additionally performed on a hall sensing area of the OIS.

Referring to FIG. 10, a scannable range 1001 for object tracking and a correctable range 1002 for image stabilization (e.g., OIS) are shown. The scannable range 1001 may be about -20° to about +20° based on a reference angle (e.g., 0°). The correctable range 1002 for image stabilization (e.g., OIS) may be about -2° to about +2° based on a reference angle (e.g., 0°). The hall code of the hall sensor may be a 0 to 4095 code based on 12 bits. In other words, the processor 510 may control the prism 211 in units of about 0.01 deg/code (≒40 deg/4096 code) for object tracking. The processor 510 may control the prism 211 in units of about 0.001 deg/code (≒4 deg/4096 code) for image stabilization.

In an embodiment, the processor 510 may perform image stabilization via a plurality of correction areas besides a first correction area 1010. For example, the processor 510 may perform image stabilization via a second correction area 1020, a third correction area 1030, or a fourth correction area 1040. The first correction area 1010 to the fourth correction area 1040 may be within a range of about 4 degrees. The first correction area 1010 to the fourth correction area 1040 may be configured to overlap each other. In addition to the first correction area 1010 to the fourth correction area 1040, a plurality of correction areas ranging from about -20 ° to about +20 ° may be configured, each correction area having a correction section within a range of about 4 °. The correction areas may be referred to as angle areas.

In an embodiment, the processor 510 may perform image stabilization by selecting one of the plurality of correction areas based on a result of object tracking. For example, when the processor 510 tracks the object and controls the prism 211 by +10 ° , and shaking of the electronic device 100 occurs at the position, the processor may perform image stabilization by selecting a correction area including +8 ° to +12 ° for image stabilization. This is only an example, and the plurality of correction areas may be configured within the scannable range 1001 without limitation.

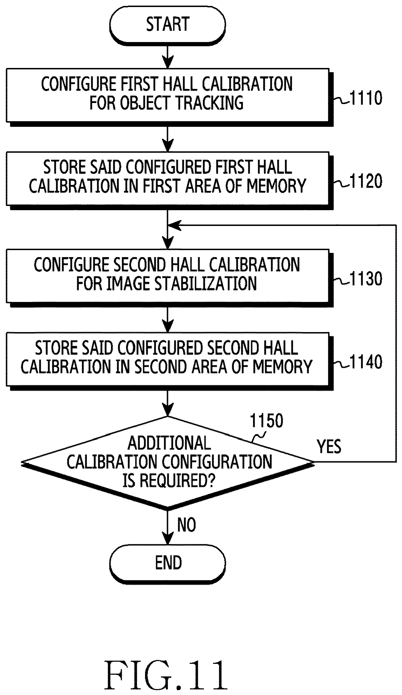

FIG. 11 is a flowchart showing a process of configuring a prism control angle in an electronic device according to an embodiment. The electronic device 100 may store first data for an area for object tracking and second data for an area for image stabilization via such a process as shown in FIG. 11. The process of FIG. 11 may be applied to various devices besides the electronic device 100.

In operation 1110 according to an embodiment, the electronic device 100 may configure data for first hall calibration for object tracking. The electronic device 100 may configure the range of the first hall calibration within a range of about 40 degrees of the control angle of the prism 211. For example, the electronic device 100 may configure the range of the first hall calibration to about -20° to about +20° based on the reference angle.

In operation 1120 according to an embodiment, the electronic device 100 may store the configured first hall calibration data in a first area of the memory 540 and/or the driver memory 553. When the processor 510 controls the prism 211 for object tracking, data for the first hall calibration may be selected and applied to the camera module 180.

In operation 1130 according to an embodiment, the electronic device 100 may configure second hall calibration for image stabilization. The electronic device 100 may configure the rage of the second hall calibration within a range of about 4 degrees of the control angle of the prism 211. For example, the electronic device 100 may configure the range of the second hall calibration to about -2° to about +2° based on the reference angle.

In operation 1140 according to an embodiment, the electronic device 100 may store the configured second hall calibration data in a second area of the memory 540 and/or the driver memory 553. The electronic device 100 may store the configured second hall calibration data in a second area, which is different from the first area, of the memory 540 and/or the driver memory 553. When the processor 510 controls the prism 211 to perform image stabilization in response to the shaking of the electronic device 100, data for the second hall calibration may be selected and applied to the camera module 180.

In operation 1150 according to an embodiment, the electronic device 100 may determine whether additional calibration configuration is required. When additional calibration configuration is required for image stabilization, the electronic device 100 may perform operation 1130 to configure hall calibration for an additional area besides the second hall calibration. The electronic device 100 may have data for a plurality of hall calibrations having a range of about 4 degrees within the range of hall calibration for object tracking (about -20° to about +20°). For example, the electronic device 100 may configure data for a third hall calibration having a range of about -20 ° to about -16 ° , a fourth hall calibration having a range of -18 ° to - 14 ° , and a fifth hall calibration having a range of 2 ° to 6 ° , and may store the configured data in a second area of the memory 540 and/or the driver memory 553. This is only an example, and data may be obtained and stored in the same way for various sections to secure image stabilization performance in various sections.

Fig. 12 is a block diagram illustrating an electronic device 1201 in a network environment 1200 according to various embodiments.

Referring to Fig. 12, the electronic device 1201 in the network environment 1200 may communicate with an electronic device 1202 via a first network 1298 (e.g., a short-range wireless communication network), or at least one of an electronic device 1204 or a server 1208 via a second network 1299 (e.g., a long-range wireless communication network). According to an embodiment, the electronic device 1201 may communicate with the electronic device 1204 via the server 1208. According to an embodiment, the electronic device 1201 may include a processor 1220, memory 1230, an input module 1250, a sound output module 1255, a display module 1260, an audio module 1270, a sensor module 1276, an interface 1277, a connecting terminal 1278, a haptic module 1279, a camera module 1280, a power management module 1288, a battery 1289, a communication module 1290, a subscriber identification module(SIM) 1296, or an antenna module 1297. In some embodiments, at least one of the components (e.g., the connecting terminal 1278) may be omitted from the electronic device 1201, or one or more other components may be added in the electronic device 1201. In some embodiments, some of the components (e.g., the sensor module 1276, the camera module 1280, or the antenna module 1297) may be implemented as a single component (e.g., the display module 1260).

The processor 1220 may execute, for example, software (e.g., a program 1240) to control at least one other component (e.g., a hardware or software component) of the electronic device 1201 coupled with the processor 1220, and may perform various data processing or computation. According to one embodiment, as at least part of the data processing or computation, the processor 1220 may store a command or data received from another component (e.g., the sensor module 1276 or the communication module 1290) in volatile memory 1232, process the command or the data stored in the volatile memory 1232, and store resulting data in non-volatile memory 1234. According to an embodiment, the processor 1220 may include a main processor 1221 (e.g., a central processing unit (CPU) or an application processor (AP)), or an auxiliary processor 1223 (e.g., a graphics processing unit (GPU), a neural processing unit (NPU), an image signal processor (ISP), a sensor hub processor, or a communication processor (CP)) that is operable independently from, or in conjunction with, the main processor 1221. For example, when the electronic device 1201 includes the main processor 1221 and the auxiliary processor 1223, the auxiliary processor 1223 may be adapted to consume less power than the main processor 1221, or to be specific to a specified function. The auxiliary processor 1223 may be implemented as separate from, or as part of the main processor 1221.

The auxiliary processor 1223 may control at least some of functions or states related to at least one component (e.g., the display module 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). According to an embodiment, the auxiliary processor 1223 (e.g., an image signal processor or a communication processor) may be implemented as part of another component (e.g., the camera module 1280 or the communication module 1290) functionally related to the auxiliary processor 1223. According to an embodiment, the auxiliary processor 1223 (e.g., the neural processing unit) may include a hardware structure specified for artificial intelligence model processing. An artificial intelligence model may be generated by machine learning. Such learning may be performed, e.g., by the electronic device 1201 where the artificial intelligence is performed or via a separate server (e.g., the server 1208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1230 may store various data used by at least one component (e.g., the processor 1220 or the sensor module 1276) of the electronic device 1201. The various data may include, for example, software (e.g., the program 1240) and input data or output data for a command related thererto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input module 1250 may receive a command or data to be used by another component (e.g., the processor 1220) of the electronic device 1201, from the outside (e.g., a user) of the electronic device 1201. The input module 1250 may include, for example, a microphone, a mouse, a keyboard, a key (e.g., a button), or a digital pen (e.g., a stylus pen).

The sound output module 1255 may output sound signals to the outside of the electronic device 1201. The sound output module 1255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1260 may visually provide information to the outside (e.g., a user) of the electronic device 1201. The display module 1260 may include, for example, a display, a hologram device, or a projector and control circuitry to control a corresponding one of the display, hologram device, and projector. According to an embodiment, the display module 1260 may include a touch sensor adapted to detect a touch, or a pressure sensor adapted to measure the intensity of force incurred by the touch.

The audio module 1270 may convert a sound into an electrical signal and vice versa. According to an embodiment, the audio module 1270 may obtain the sound via the input module 1250, or output the sound via the sound output module 1255 or a headphone of an external electronic device (e.g., an electronic device 1202) directly (e.g., wiredly) or wirelessly coupled with the electronic device 1201.

The sensor module 1276 may detect an operational state (e.g., power or temperature) of the electronic device 1201 or an environmental state (e.g., a state of a user) external to the electronic device 1201, and then generate an electrical signal or data value corresponding to the detected state. According to an embodiment, the sensor module 1276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device (e.g., the electronic device 1202) directly (e.g., wiredly) or wirelessly. According to an embodiment, the interface 1277 may include, for example, a high definition multimedia interface (HDMI), a universal serial bus (USB) interface, a secure digital (SD) card interface, or an audio interface.

A connecting terminal 1278 may include a connector via which the electronic device 1201 may be physically connected with the external electronic device (e.g., the electronic device 1202). According to an embodiment, the connecting terminal 1278 may include, for example, a HDMI connector, a USB connector, a SD card connector, or an audio connector (e.g., a headphone connector).

The haptic module 1279 may convert an electrical signal into a mechanical stimulus (e.g., a vibration or a movement) or electrical stimulus which may be recognized by a user via his tactile sensation or kinesthetic sensation. According to an embodiment, the haptic module 1279 may include, for example, a motor, a piezoelectric element, or an electric stimulator.

The camera module 1280 may capture a still image or moving images. According to an embodiment, the camera module 1280 may include one or more lenses, image sensors, image signal processors, or flashes.

The power management module 1288 may manage power supplied to the electronic device 1201. According to one embodiment, the power management module 1288 may be implemented as at least part of, for example, a power management integrated circuit (PMIC).

The battery 1289 may supply power to at least one component of the electronic device 1201. According to an embodiment, the battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the application processor (AP)) and supports a direct (e.g., wired) communication or a wireless communication. According to an embodiment, the communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device via the first network 1298 (e.g., a short-range communication network, such as Bluetooth (TM), wireless-fidelity (Wi-Fi) direct, or infrared data association (IrDA)) or the second network 1299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1292 may identify and authenticate the electronic device 1201 in a communication network, such as the first network 1298 or the second network 1299, using subscriber information (e.g., international mobile subscriber identity (IMSI)) stored in the subscriber identification module 1296.

The wireless communication module 1292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1292 may support a high-frequency band (e.g., the mmWave band) to achieve, e.g., a high data transmission rate. The wireless communication module 1292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1292 may support various requirements specified in the electronic device 1201, an external electronic device (e.g., the electronic device 1204), or a network system (e.g., the second network 1299). According to an embodiment, the wireless communication module 1292 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (LTL), or a round trip of 1ms or less) for implementing URLLC.

The antenna module 1297 may transmit or receive a signal or power to or from the outside (e.g., the external electronic device) of the electronic device 1201. According to an embodiment, the antenna module 1297 may include an antenna including a radiating element composed of a conductive material or a conductive pattern formed in or on a substrate (e.g., a printed circuit board (PCB)). According to an embodiment, the antenna module 1297 may include a plurality of antennas (e.g., array antennas). In such a case, at least one antenna appropriate for a communication scheme used in the communication network, such as the first network 1298 or the second network 1299, may be selected, for example, by the communication module 1290 (e.g., the wireless communication module 1292) from the plurality of antennas. The signal or the power may then be transmitted or received between the communication module 1290 and the external electronic device via the selected at least one antenna. According to an embodiment, another component (e.g., a radio frequency integrated circuit (RFIC)) other than the radiating element may be additionally formed as part of the antenna module 1297.

According to various embodiments, the antenna module 1297 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1201 and the external electronic device 1204 via the server 1208 coupled with the second network 1299. Each of the electronic devices 1202 or 1204 may be a device of a same type as, or a different type, from the electronic device 1201. According to an embodiment, all or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1201. The electronic device 1201 may provide the outcome, with or without further processing of the outcome, as at least part of a reply to the request. To that end, a cloud computing, distributed computing, mobile edge computing (MEC), or client-server computing technology may be used, for example. The electronic device 1201 may provide ultra-low-latency services using, e.g., distributed computing or mobile edge computing. In another embodiment, the external electronic device 1204 may include an internet-of-things (IoT) device. The server 1208 may be an intelligent server using machine learning and/or a neural network. According to an embodiment, the external electronic device 1204 or the server 1208 may be included in the second network 1299. The electronic device 1201 may be applied to intelligent services (e.g., smart home, smart city, smart car, or healthcare) based on 5G communication technology or IoT-related technology.

Fig. 13 is a block diagram 1300 illustrating the camera module 1280 according to various embodiments.

Referring to Fig. 13, the camera module 1280 may include a lens assembly 1310, a flash 1320, an image sensor 1330, an image stabilizer 1340, memory 1350 (e.g., buffer memory), or an image signal processor 1360. The lens assembly 1310 may collect light emitted or reflected from an object whose image is to be taken. The lens assembly 1310 may include one or more lenses. According to an embodiment, the camera module 1280 may include a plurality of lens assemblies 1310. In such a case, the camera module 1280 may form, for example, a dual camera, a 360-degree camera, or a spherical camera. Some of the plurality of lens assemblies 1310 may have the same lens attribute (e.g., view angle, focal length, auto-focusing, f number, or optical zoom), or at least one lens assembly may have one or more lens attributes different from those of another lens assembly. The lens assembly 1310 may include, for example, a wide-angle lens or a telephoto lens.

The flash 1320 may emit light that is used to reinforce light reflected from an object. According to an embodiment, the flash 1320 may include one or more light emitting diodes (LEDs) (e.g., a red-green-blue (RGB) LED, a white LED, an infrared (IR) LED, or an ultraviolet (UV) LED) or a xenon lamp. The image sensor 1330 may obtain an image corresponding to an object by converting light emitted or reflected from the object and transmitted via the lens assembly 1310 into an electrical signal. According to an embodiment, the image sensor 1330 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 1330 may be implemented using, for example, a charged coupled device (CCD) sensor or a complementary metal oxide semiconductor (CMOS) sensor.

The image stabilizer 1340 may move the image sensor 1330 or at least one lens included in the lens assembly 1310 in a particular direction, or control an operational attribute (e.g., adjust the read-out timing) of the image sensor 1330 in response to the movement of the camera module 1280 or the electronic device 1201 including the camera module 1280. This allows compensating for at least part of a negative effect (e.g., image blurring) by the movement on an image being captured. According to an embodiment, the image stabilizer 1340 may sense such a movement by the camera module 1280 or the electronic device 1201 using a gyro sensor (not shown) or an acceleration sensor (not shown) disposed inside or outside the camera module 1280. According to an embodiment, the image stabilizer 1340 may be implemented, for example, as an optical image stabilizer. The memory 1350 may store, at least temporarily, at least part of an image obtained via the image sensor 1330 for a subsequent image processing task. For example, if image capturing is delayed due to shutter lag or multiple images are quickly captured, a raw image obtained (e.g., a Bayer-patterned image, a high-resolution image) may be stored in the memory 1350, and its corresponding copy image (e.g., a low-resolution image) may be previewed via the display module 1260. Thereafter, if a specified condition is met (e.g., by a user's input or system command), at least part of the raw image stored in the memory 1350 may be obtained and processed, for example, by the image signal processor 1360. According to an embodiment, the memory 1350 may be configured as at least part of the memory 1230 or as a separate memory that is operated independently from the memory 1230.

The image signal processor 1360 may perform one or more image processing with respect to an image obtained via the image sensor 1330 or an image stored in the memory 1350. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 1360 may perform control (e.g., exposure time control or read-out timing control) with respect to at least one (e.g., the image sensor 1330) of the components included in the camera module 1280. An image processed by the image signal processor 1360 may be stored back in the memory 1350 for further processing, or may be provided to an external component (e.g., the memory 1230, the display module 1260, the electronic device 1202, the electronic device 1204, or the server 1208) outside the camera module 1280. According to an embodiment, the image signal processor 1360 may be configured as at least part of the processor 1220, or as a separate processor that is operated independently from the processor 1220. If the image signal processor 1360 is configured as a separate processor from the processor 1220, at least one image processed by the image signal processor 1360 may be displayed, by the processor 1220, via the display module 1260 as it is or after being further processed.

According to an embodiment, the electronic device 1201 may include a plurality of camera modules 1280 having different attributes or functions. In such a case, at least one of the plurality of camera modules 1280 may form, for example, a wide-angle camera and at least another of the plurality of camera modules 1280 may form a telephoto camera. Similarly, at least one of the plurality of camera modules 1280 may form, for example, a front camera and at least another of the plurality of camera modules 1280 may form a rear camera.

In various embodiments, an electronic device 100 may include a camera module 180 including a prism 211, at least one sensor, at least one processor (e.g., the processor 510 of FIG. 5) electrically connected to the camera module and the at least one sensor. The processor 510 may drive the camera module 180 to obtain image data, and may detect an object based on the obtained image data. The processor 510 may control the prism 211 to track the object based on first data for controlling the movement of the prism 211 by a first unit angle in a first angle range. The processor 510 may control the prism 211 for image stabilization based on second data for controlling the movement of the prism 211 by a second unit angle smaller than the first unit angle in a second angle range smaller than the first angle range.

In an embodiment, the processor 510 may control the prism 211 based on third data for controlling by the second unit angle in the second angle range.

In an embodiment, the second data may be data configured to control the prism 211 for the first angle area in the first angle range, and the third data may be data configured to control the prism 211 for a second angle area different from the first angle area in the first angle range.

In an embodiment, the first data may be stored in a first area of a memory (e.g., the memory 540 of FIG. 5 or the driver memory 553 of FIG. 5), the second data may be stored in a second area different from the first area of the memory, and the third data may be stored in a third area different from the first area and the second area of the memory.

In an embodiment, the processor 510 may obtain, via a hall sensor (e.g., the hall sensor 520 of FIG. 5), a hall voltage produced from the movement of the prism 211 and a magnet (e.g., the magnetic member 410 of FIG. 4) included in the camera module 180. In an embodiment, the processor 510 may identify at least one among the position or direction of the prism 211 via the hall sensor 520.

In an embodiment, the processor 510 may obtain a control signal of the prism 211 based on the first data or the second data. The processor 510 may apply current to a driving coil (e.g., the first coil 420 and/or the second coil 421 of FIG. 4) based on the control signal to control the prism 211.

In an embodiment, the processor 510 may determine data to be applied to the camera module 180 from among the first data and the second data, in response to the occurrence of an event related to the control of the prism 211. In the disclosure, an event related to the control of the prism 211 may be referred to as a prism control event.

In an embodiment, in case of performing image stabilization, the processor 510 may selectively apply at least one among the second data and third data configured to control by the second unit angle in the second angle range to control the prism 211, based on the position of the prism 211 according to the object tracking.

In an embodiment, the processor 510 may control the prism 211 to track the object, based on the first data for controlling the movement of the prism 211 in an angle unit of about 0.01 degrees in an angle range of about 40 degrees. In an embodiment, the processor 510 may control the prism 211 for image stabilization, based on the second data for controlling the movement of the prism 211 in an angle unit of about 0.001 degrees in an angle range of about 4 degrees.

In an embodiment, the prism 211 may reflect light incident in a first direction (e.g., the -y direction of FIG. 1) of the camera module 180 toward a lens assembly in a second direction (e.g., the +x direction of FIG. 1).

In various embodiments, an operation method of the electronic device 100 may include the operations of: driving the camera module 180 to obtain image data; detecting an object based on the obtained image data; controlling the prism 211 to track the object based on first data for controlling the movement of the prism 211 by a first unit angle in a first angle range; and controlling the prism 211 for image stabilization based on second data for controlling the movement of the prism 211 by a second unit angle smaller than the first unit angle in a second angle range smaller than the first angle range.

In an embodiment, the operation method of the electronic device 100 may include controlling the prism 211 based on third data for controlling by the second unit angle in the second angle range. The second data may be data configured to control the prism 211 for a first angle area in the first angle range, and the third data may be data configured to control the prism 211 for a second angle area different from the first angle area in the first angle range.

In an embodiment, the first data may be stored in a first area of a memory (e.g., the memory 540 of FIG. 5 or the driver memory 553 of FIG. 5), the second data may be stored in a second area different from the first area of the memory, and the third data may be stored in a third area different from the first area and the second area of the memory.

In an embodiment, the operation method of the electronic device 100 may include obtaining, via a hall sensor (e.g., the hall sensor 520 of FIG. 5), a hall voltage produced from the movement of the prism 211 and a magnet (e.g., the magnetic member 410 of FIG. 4) included in the camera module 180. The operation method of the electronic device 100 may include identifying at least one among the position or direction of the prism 211 via the hall sensor 520.

In an embodiment, in case of performing image stabilization, the operation method of the electronic device 100 may include selectively applying at least one among the second data and third data to control the prism 211, based on the position of the prism 211 according to the object tracking.

In various embodiments, an electronic device 100 may include a camera module including a prism 211 and a lens assembly 231, at least one sensor, at least one processor (e.g., the processor 510 of FIG. 5) operatively connected to the camera module 180 and the at least one sensor, and a memory (e.g., the memory 540 of FIG. 5 or the driver memory 553 of FIG. 5) operatively connected to the at least one processor.

In an embodiment, the memory (e.g., the memory 540 of FIG. 5 or the driver memory 553 of FIG. 5) may store instructions which, when executed, allow the processor 510 to drive the camera module 180 to obtain image data.

In an embodiment, the memory (e.g., the memory 540 of FIG. 5 or the driver memory 553 of FIG. 5) may store instructions which, when executed, in a case where a control event of the prism 211 occurs, allow the processor 510 to determine at least one mode among a first mode for object tracking and a second mode for image stabilization, in response to the event.

In an embodiment, when the first mode is determined, the memory (e.g., the memory 540 of FIG. 5 or the driver memory 553 of FIG. 5) may store instructions which, when executed, allow the processor 510 to control the prism 211, based on first data for controlling the movement of the prism 211 by a first unit angle in a first angle range.

In an embodiment, when the second mode is determined, the memory (e.g., the memory 540 of FIG. 5 or the driver memory 553 of FIG. 5) may store instructions which, when executed, allow the processor 510 to control the prism 211, based on second data for controlling the movement of the prism 211 by a second unit angle smaller than the first unit angle in a second angle range smaller than the first angle range.

In an embodiment, a control event of the prism 211 may occur when movement of an object detected based on the obtained image data is detected or shaking of the electronic device 100 is detected.

In an embodiment, the memory (e.g., the memory 540 of FIG. 5 or the driver memory 553 of FIG. 5) may store instructions which, when executed, allow the processor 510 to control the prism 211 in the first mode based on the first data for controlling the movement of the prism 211 in an angle unit of about 0.01 degrees in an angle range of about 40 degrees.

In an embodiment, the memory (e.g., the memory 540 of FIG. 5 or the driver memory 553 of FIG. 5) may store instructions which, when executed, allow the processor 510 to control the prism 211 in the second mode based on the second data for controlling the movement of the prism 211 in an angle unit of about 0.001 degrees in an angle range of about 4 degrees.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1240) including one or more instructions that are stored in a storage medium (e.g., internal memory 1236 or external memory 1238) that is readable by a machine (e.g., the electronic device 1201). For example, a processor (e.g., the processor 1220) of the machine (e.g., the electronic device 1201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore (TM)), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a camera module comprising a prism;
at least one sensor; and
at least one processor electrically connected to the camera module and the at least one sensor,
wherein the at least one processor is configured to:
drive the camera module to obtain image data;
detect an object based on the obtained image data;
control the prism to track the object based on first data for controlling movement of the prism by a first unit angle in a first angle range; and
control the prism for image stabilization based on second data for controlling movement of the prism by a second unit angle smaller than the first unit angle in a second angle range smaller than the first angle range.

2. The electronic device of claim 1, wherein the at least one processor is configured to control the prism based on third data for controlling by the second unit angle in the second angle range.

3. The electronic device of claim 2, wherein the second data is data configured to control the prism for a first angle area in the first angle range, and
the third data is data configured to control the prism for a second angle area different from the first angle area in the first angle range.

4. The electronic device of claim 2, further comprising a memory electrically connected to the at least one processor,
wherein the first data is stored in a first area of the memory,
the second data is stored in a second area different from the first area of the memory, and
the third data is stored in a third area different from the first area and the second area of the memory.

5. The electronic device of claim 1, wherein the at least one sensor comprises a hall sensor, and
wherein the at least one processor is configured to:
obtain, via the hall sensor, a hall voltage produced from the movement of the prism and a magnet comprised in the camera module; and
identify at least one among the position or direction of the prism via the hall sensor.

6. The electronic device of claim 5, wherein the camera module comprises a driving coil related to the driving of the prism, and
wherein the at least one processor is configured to:
obtain a prism control signal based on the first data or the second data; and
apply current to the driving coil based on the prism control signal to control the prism.

7. The electronic device of claim 1, wherein the at least one processor is configured to determine data to be applied to the camera module from among the first data and the second data, in response to the occurrence of an event related to the control of the prism.

8. The electronic device of claim 1, wherein, in case of performing image stabilization, the at least one processor is configured to selectively apply at least one among the second data and third data configured to control by the second unit angle in the second angle range to control the prism, based on the position of the prism according to the object tracking.

9. The electronic device of claim 1, wherein the at least one processor is configured to:
control the prism to track the object based on the first data for controlling the movement of the prism in an angle unit of 0.01 degrees in an angle range of 40 degrees; and
control the prism for image stabilization based on the second data for controlling the movement of the prism in an angle unit of 0.001 degrees in an angle range of 4 degrees.

10. The electronic device of claim 1, wherein the camera module comprises a lens assembly aligned along the optical axis, and
the prism reflects light incident in a first direction of the camera module toward the lens assembly in a second direction.

11. An operation method of an electronic device, the operation method comprising:
driving a camera module to obtain image data;
detecting an object based on the obtained image data;
controlling a prism to track the object based on first data for controlling the movement of the prism by a first unit angle in a first angle range, the prism being comprised in the camera module; and
controlling the prism for image stabilization based on second data for controlling the movement of the prism by a second unit angle smaller than the first unit angle in a second angle range smaller than the first angle range.

12. The method of claim 11, further comprising controlling the prism based on third data for controlling by the second unit angle in the second angle range,
wherein the second data is data configured to control the prism for a first angle area in the first angle range, and
the third data is data configured to control the prism for a second angle area different from the first angle area in the first angle range.

13. The method of claim 12, wherein the first data is stored in a first area of a memory,
the second data is stored in a second area different from the first area of the memory, and
the third data is stored in a third area different from the first area and the second area of the memory.

14. The method of claim 11, further comprising:
obtaining, via a hall sensor, a hall voltage produced from the movement of the prism and a magnet comprised in the camera module; and
identifying at least one among the position or direction of the prism via the hall sensor.

15. The method of claim 12, comprising, in case of performing image stabilization, selectively applying at least one among the second data and third data to control the prism, based on the position of the prism according to the object tracking.
